# EUROPEAN PATENT SPECIFICATION

(11) **EP 2 876 941 B1**
(45) Date of publication and mention of the grant of the patent: **02.01.2019**
(21) Application number: 13838797.2
(22) Date of filing: 10.09.2013
(51) Int. Cl.: H04W 48/16, H04W 52/02

(54) **METHOD AND APPARATUS FOR FINDING SMALL CELLS**
VERFAHREN UND VORRICHTUNG ZUM AUFFINDEN VON KLEINEN ZELLEN
PROCÉDÉ ET APPAREIL POUR TROUVER DE PETITES CELLULES

(30) Priority: 21.09.2012 CN 201210353418
(43) Date of publication of application: 27.05.2015
(73) Proprietor: ZTE Corporation, Shenzhen, Guangdong 518057 (CN)
(72) Inventor: GOU, Wei, Shenzhen Guangdong 518057 (CN); XIA, Shuqiang, Shenzhen Guangdong 518057 (CN); DAI, Bo, Shenzhen Guangdong 518057 (CN)
(74) Representative: Lavoix
(86) International application number: PCT/CN2013/083243
(87) International publication number: WO 2014/044132

(56) References cited:
- WO-A2-2012/094608
- CN-A- 101 784 039
- CN-A- 102 238 663
- CN-A- 102 883 408
- NOKIA SIEMENS NETWORKS ET AL: "Background search for small cell detection", 3GPP DRAFT; R2-123102 BACKGROUND_SMALL_CELL_SEARCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 24 May 2012 (2012-05-24), XP050607523, [retrieved on 2012-05-24]
- VODAFONE: "Small Cell Discovery for Traffic Offloading", 3GPP DRAFT; R2-114009, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 15 August 2011 (2011-08-15), XP050539685, [retrieved on 2011-08-15]
- ITRI: "Inter-frequency Small Cell Detection", 3GPP DRAFT; R2-123622, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao; 20120813 - 20120817 7 August 2012 (2012-08-07), XP050665643, Retrieved from the Internet: URL:http://www.3gpp.org/ftp/tsg_ran/WG2_RL 2/TSGR2_79/Docs/ [retrieved on 2012-08-07]
- QUALCOMM INCORPORATED: "Inter-frequency Small Cell Identification", 3GPP DRAFT; R2-120654_INTER-FREQUENCY SMALL CELL IDENTIFICATION_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 31 January 2012 (2012-01-31), XP050565505, [retrieved on 2012-01-31]

## Description

### TECHNICAL FIELD

The disclosure relates to the field of mobile communication, and in particular to a method and apparatus for discovering a small cell.

### BACKGROUND

With development of mobile communication industry and an increasing demand for a mobile data service, there is an increasingly stringent user requirement to a mobile communication rate and Quality of Service (Qos). Thus, research and development relating to a next generation mobile communication system has been launched before large-scale commercial use of a third generation (3G) mobile communication. In a typical Long Term Evolution (LTE) project started by a 3rd Generation Partnership Project (3GPP), a highest spectrum bandwidth an LTE system may provide is 20MHz (Megahertz). With further evolution of a network, LTE- Advanced (LTE-A) as an advanced LTE system may provide a spectrum bandwidth up to 100MHz, support more flexible, higher-quality communication, and have excellent backward compatibility. In the LTE-A system, there are multiple Component Carriers (CC); an LTE User Equipment (UE) can only operate on a certain backward compatible CC, while a more capable LTE-A UE may perform transfer simultaneously on multiple CCs. That is, simultaneous transfer and receiving of data of an LTE-A UE on multiple CCs may be implemented, thereby increasing bandwidth. Such technology is referred to as Multi-carrier aggregation.

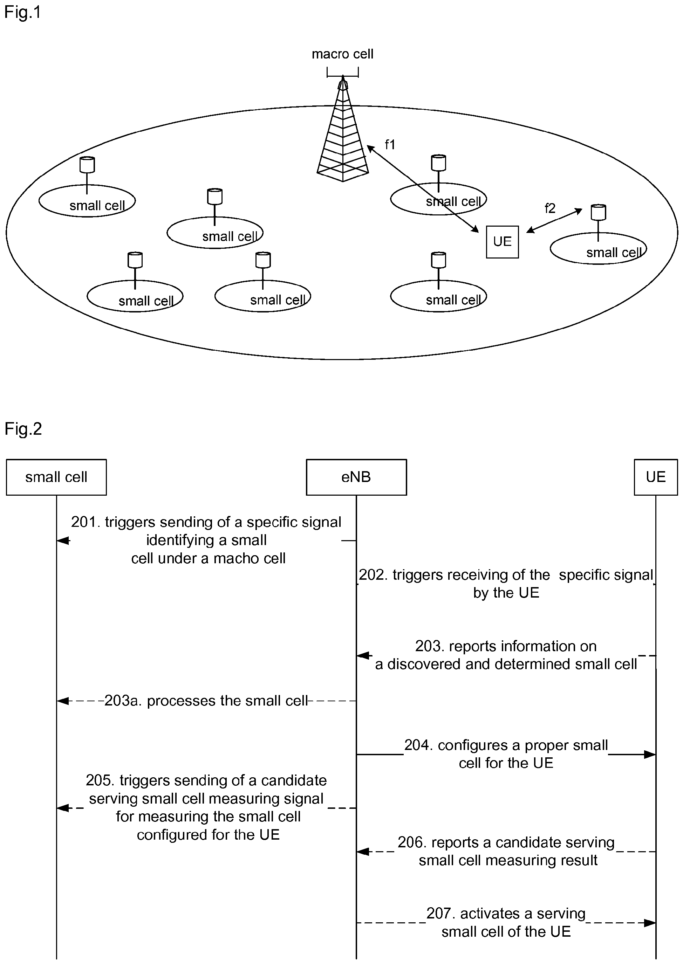

In existing LTE, to improve UE communication within a local hotspot and increase spectral efficiency, a small cell is introduced. A small cell covers a small range (of a radius of tens of meters) with a low transmit power and a high deploying density. A small cell is spoken of in context of a macro cell. A macro cell in general covers a large range (of a radius of 500 meters or more) with a high transmit power. A macro cell may use a frequency identical to that of a small cell, may also be use a different frequency. When a different frequency is used, the macro cell in general may use a lower band for larger-range coverage, a small cell in general may use a higher band, providing a high-rate data service. Fig.1 is a schematic diagram of typical coverage of a macro cell and small cells. There are multiple small cells under the coverage of the macro cell. Each of the small cells uses a different band. The macro cell uses a frequency f1. A small cell uses a frequency f2. Of course, in carrier aggregation, both the macro cell and a small cell may use multiple frequencies, and frequencies of the macro cell and the small cell do not overlap. For example, according to a carrier attribute, a macro cell in general uses a frequency of 2GHz or less, and a small cell in general uses a frequency of 3Ghz or more.

As a small cell covers a small range and there are a large number of small cells, and most small cells use frequencies different from that used by the macro cell, in a system configured with a small cell, a UE may have to execute frequent inter-frequency measurement, which may impact the UE as follows.
1, the UE may have increased power consumption;
2, there may be impact on data transfer from the macro cell to the UE, as in inter-frequency measurement, data transfer with the original frequency for most UEs may have to be interrupted.

Thus, in a system with a large number of small cells, small cell measurement optimization may have to be taken in to account to help a UE save energy.

3GPP draft documents R2-123102, "Background search for small cell selection", R2-114009, "Small Cell Discovery for Traffic Offloading", and R2-123622, "Inter-frequency Small Cell Detection" are three different proposals of small cell measurement optimization allowing to save UE energy.

In addition, in existing research, on basis of Multi-carrier aggregation, an LTE R11 stage raises a new requirement to spectrum resource utilization, network energy saving, and inter-cell interference suppression. To this end, a new carrier type is proposed for application with carrier aggregation. With the new carrier type, no backward compatibility has to be taken in to account in design, and the the new carrier type may be applied with more new technology. For example, with a definition in current LTE R11, a new carrier is defined to pair with at least one compatible carrier in application, and no LTE R8 Cell-specific Reference Signal (CRS) may be configured in a new carrier to avoid severe cell edge CRS interference between neighboring cells, especially CRS interference between a macro cell and a small cell in a Heterogeneous Network (HetNet).

Any carrier in a small cell may be configured with a new carrier type, which may effectively help power saving in a small cell. For example, a small cell serving no UE may be deactivated, and thus may help a network side save energy. However , no solution is proposed in related art for allowing a deactivated small cell to be discovered by a UE to be configured with a small cell and be configured to the UE, or for selecting, from a large number of small cells, a suitable small cell for a UE.

### SUMMARY

To this end, it is desired that an embodiment herein provides a method and apparatus for discovering a small cell, capable of at least implementing discovering, by a UE in a macro cell, a small cell under the macro cell, implementing energy saving at a network side and a UE.

To this end, a technical solution according to an embodiment herein may be implemented as follows.

A method for discovering a small cell may include: triggering, by a base station managing a macro cell, receiving of a specific signal by a User Equipment (UE). The specific signal may identify an small cell.

The base station may notify, by signaling, a small cell managing base station to send the specific signal.

The method may further include: after the triggering, by a base station, receiving of a specific signal by a UE, receiving, by the base station, information on any small cell discovered and determined to report by the UE according to the received specific signal; and selecting, by the base station, part or all of the any small cell reported by the UE, and configuring such a selected small cell as a candidate serving small cell of the UE.

The method may further include: after the selecting, by the base station, part or all of the any small cell reported by the UE, and configuring such a selected small cell as a candidate serving small cell of the UE, triggering, by the base station, sending of a candidate serving small cell measuring signal to the UE; receiving, by the base station, a candidate serving small cell measuring result reported by the UE; selecting, according to the received candidate serving small cell measuring result, a candidate serving small cell as a serving small cell of the UE; and activating the serving small cell of the UE.

The base station may select a candidate serving small cell as the serving small cell of the UE according to a small cell load, channel quality, and carrier aggregation capability of the UE.

The specific signal may be one of:
a discovery signaling;
a Channel State Information Reference Signal (CSI-RS);
a Primary synchronization signal (PSS) and/or a Secondary synchronization signal (SSS);
a synchronization tracking reference signal; and
a Cell-specific Reference Signal (CRS).

The base station may notify, via a macro cell, the UE of the specific signal or a range for detecting the specific signal.

A carrier in the small cell may include a carrier of a new carrier type.

The small cell may support camping of no idle UE.

When no data is transferred for a UE in a small cell, a small cell may be inactive, and no specific signal identifying the small cell may be sent. When data is transferred for a UE in a small cell, the small cell may be in an active state, and the specific signal identifying the small cell may be sent.

An inactive small cell may be activated by the base station and a specific signal identifying the activated small cell may be sent only when it is determined that small cell configuration is required for at least one UE. No specific signal identifying an inactive small cell may be sent.

The base station may trigger receiving of the specific signal by the UE by sending dedicated Radio Resource Control (RRC) signaling or by broadcast.

No specific signal may be received by the UE before the receiving of the specific signal by the UE is triggered by the base station.

The any small cell reported by the UE may include a small cell with channel quality meeting a requirement.

The base station may select part or all of the any small cell reported by the UE according to a small cell load, channel quality, and carrier aggregation capability of the UE, and configure such a selected small cell as a candidate serving small cell of the UE.

The candidate serving small cell measuring signal may be a Channel State Information reference signal (CSI-RS) or a Cell-specific Reference Signal (CRS).

When no data is transferred for a UE in a small cell or a small cell is not configured as a candidate serving small cell of a UE, no candidate serving small cell measuring signal for measuring the small cell may be sent. When data is transferred for a UE in a small cell or a small cell is configured as a candidate serving small cell of a UE, a candidate serving small cell measuring signal for measuring the small cell may be sent.

The specific signal identifying a small cell may no longer be sent once it is determined that the small cell is not configured as a candidate serving small cell.

An apparatus for discovering a small cell may apply to a base station managing a macro cell. The apparatus may include:
a triggering module configured for triggering receiving of a specific signal by a User Equipment (UE), wherein the specific signal identifies an inactive small cell.

The triggering module may notify, by signaling, a small cell managing base station to send the specific signal.

The apparatus may further include: an information receiving module configured for receiving information on any small cell discovered and determined to report by the UE according to the received specific signal; and
a configuring module configured for selecting part or all of the any small cell reported by the UE, and configuring such a selected small cell as a candidate serving small cell of the UE.

The apparatus may further include: an activating module configured for: triggering sending of a candidate serving small cell measuring signal to the UE; receiving a candidate serving small cell measuring result reported by the UE; selecting, according to the received candidate serving small cell measuring result, a candidate serving small cell as a serving small cell of the UE; and activating the serving small cell of the UE.

The activating module may be further configured for: selecting a candidate serving small cell as the serving small cell of the UE according to a small cell load, channel quality, and carrier aggregation capability of the UE.

The triggering module may be further configured for: triggering receiving of the specific signal by the UE by sending dedicated Radio Resource Control (RRC) signaling or by broadcast.

The configuring module may be further configured for: selecting part or all of the any small cell reported by the UE according to a small cell load, channel quality, and carrier aggregation capability of the UE, and configuring such a selected small cell as a candidate serving small cell of the UE.

A small cell Network Element (NE) may include:
a notification receiving module configured for: receiving notification sent by a base station managing a macro cell to send a specific signal identifying an inactive small cell; and
a specific signal sending module configured for: after receiving the notification sent by the base station managing the macro cell, sending the specific signal to a User Equipment (UE) in the macro cell.

The small cell NE may further include: a measuring signal sending module configured for: when the small cell is selected as a candidate serving small cell of the UE, sending a candidate serving small cell measuring signal to the UE according to a trigger of the base station.

The small cell NE may further include: a UE serving module configured for: serving the UE when the small cell is activated by the base station as a serving small cell of the UE.

The small cell may support camping of no idle UE.

The small cell NE may be inactive and send no specific signal when transferring no data for a UE. The small cell NE may be active and send the specific signal identifying the small cell when data is transferred for a UE in the small cell.

The small cell NE may be configured for: sending no candidate serving small cell measuring signal when no data is transferred for a UE in the small cell or the small cell is not configured as a candidate serving small cell; and/or sending a candidate serving small cell measuring signal when the small cell NE transfers data for a UE or the small cell is configured as a candidate serving small cell.

A User Equipment (UE) may include:
a specific signal receiving module configured for receiving a specific signal identifying a small cell under a macro cell according to a trigger of a base station managing the macro cell; and
a small cell reporting module configured for: discovering the small cell according to the received specific signal, and reporting information on a discovered small cell to the base station.

The UE may further include: a measuring module configured for receiving a candidate serving small cell measuring signal for measuring a candidate serving small cell selected by the base station, and reporting a candidate serving small cell measuring result to the base station.

The specific signal receiving module may be configured for receiving no specific signal without the trigger of the base station.

The small cell reporting module may be configured for reporting a small cell with channel quality meeting a requirement

With a method and apparatus for discovering a small cell according to an embodiment herein, in a HetNet of a radio communication system, a UE in a macro cell can discover a small cell under the macro cell, and a network side can select a suitable small cell to serve a UE. With the disclosure, effective energy saving at both a network side and a UE may be ensured.

### BRIEF DESCRIPTION OF THE DRAWINGS

Fig.1 is a schematic diagram of typical coverage of a macro cell and small cells in related art.
Fig.2 is a flowchart of a method for discovering a small cell according to an embodiment herein.

### DETAILED DESCRIPTION

A technical solution of the disclosure is elaborated below with reference to drawings and embodiments.

A method for discovering a small cell according to an embodiment herein, as shown in Fig.2, main may include steps as follows.

In step 201-202, a base station, i.e., eNB, managing a macro cell triggers sending of a specific signal, and triggers receiving of the specific signal by a UE. The specific signal may identify an inactive small cell. The trigger may include sending a notification by signaling or by a special signal. For example, the base station may send a pulse signal. In fact, the base station managing the macro cell may also manage a small cell (introduction herein is in context of a HetNet). An inactive small cell refers to a small cell serving no UE.

In the steps, a base station may trigger sending of a specific signal. The specific signal may identify a small cell. The base station may trigger receiving of the specific signal by a UE. The base station may manage the small cell. For example, the small cell may be under the macro cell. Alternatively, two macro base stations or two small cells may be involved. A base station may trigger sending of such a specific signal by signaling a base station managing the small cell to send the specific signal.

The base station managing the macro cell (i.e., the eNB shown in Fig.2) may trigger, as needed, sending of a specific signal identifying a subordinate small cell, and trigger receiving of the specific signal by a UE.

The base station may notify, via a macro cell, the UE of the specific signal or a range for detecting the specific signal.

An inactive small cell may be activated by the base station and a specific signal for the activated small cell may be sent only when it is determined that small cell configuration is required for at least one UE. No specific signal may be sent for an inactive small cell according to an embodiment herein.

The base station may trigger receiving of the specific signal by the UE by sending dedicated Radio Resource Control (RRC) signaling or by broadcast.

No such specific signal may be received by the UE before the receiving of the specific signal by the UE is triggered by the base station.

In step 203, the base station receives information on any small cell discovered and determined to report by the UE according to the received specific signal.

In the step, the base station may receive reported information determined by the UE according to a received specific signal. The step is optional. For example, following step 201-202, the base station may use only information in step 203 as reference information in determining a small cell.

A UE may recognize and determine a corresponding small cell according to a received specific signal, and report information on a small cell determined to the base station. A small cell reported by the UE may be one with channel quality meeting a requirement. For example, a UE may report IDs (or indices and measured strengths) of M cells with best measuring results. When measurement is conducted on carriers of different frequencies, frequency information thereof has to be reported too.

In step 204, part or all of the any small cell reported by the UE may be selected by the base station. Such a selected small cell may be configured by the base station as a candidate serving small cell of the UE. A candidate serving small cell refers to one configured for the UE. It is to be determined whether a candidate serving small cell is used for data transfer for the UE.

In the step, the base station may configure a serving cell of the UE according to information reported by the UE. The step is optional. For example, the base station may use information on a small cell reported by a UE only as reference in configuring the serving small cell for the UE. In an extreme case (such as when any UE reported small cell is heavily loaded), the base station may configure a non-UE-reported small cell for the UE.

The base station may select part or all of the any small cell reported by the UE, and configure such a selected small cell as a candidate serving small cell of the UE.

The base station selecting part or all of the any small cell reported by the UE according to a small cell load, channel quality, and carrier aggregation capability of the UE, and configuring such a selected small cell as a candidate serving small cell of the UE.

The specific signal identifying a small cell may no longer be sent once it is determined that the small cell is not configured as a candidate serving small cell of the UE. Optionally, following step 203, there may be a step 203a, in which the base station may notify to stop sending a specific signal identifying a small cell not configured as a candidate serving small cell of the UE.

Following step 204, there may be step 205-207, in which the base station may trigger sending of a candidate serving small cell measuring signal to the UE, receive a candidate serving small cell measuring result reported by the UE, select, according to the received candidate serving small cell measuring result, a candidate serving small cell as a serving small cell of the UE, and activate the serving small cell of the UE.

The base station may select a candidate serving small cell as the serving small cell of the UE according to a small cell load, channel quality, and carrier aggregation capability of the UE.

No candidate serving small cell measuring signal may be sent before a small cell is configured as a candidate serving small cell.

When no data is transferred for the UE in a small cell or a small cell is not configured as a candidate serving small cell, no candidate serving small cell measuring signal for measuring the small cell may be sent. When data is transferred for the UE in a small cell or a small cell is configured as a candidate serving small cell, a candidate serving small cell measuring signal for measuring the small cell may be sent.

Note that in the flow shown in Fig.2, a step corresponding to a dashed arrow is optional.

In the flow, both the base station and the UE are configured to save energy. According to an embodiment herein, part or all of the carriers in a small cell may be of a new carrier type. When a small cell is configured to no UE or the small cell or no data is transferred for any UE in a small cell, no information (neither specific signal nor measuring signal) for the small cell is sent. The small cell may be inactive (deactivated to be in an energy saving state). Alternatively, a small cell is inactive before sending of a specific signal identifying the small cell is triggered by the base station. Sending of a signal relevant to such a small cell (such as a specific signal) is triggered only as needed by the base station, thereby ensuring network side energy saving. A small cell supports camping of no idle UE. An idle UE may have to camp in the macro cell. An activated small cell (i.e. a small cell configured for at least one UE or currently transferring data for a UE) keeps sending the specific signal, such that a UE may discover an activated small cell with ease.

An idle UE may receive no small cell ID or measuring signal, such that an idle UE is not required to discover a small cell or execute measurement for a small cell, thereby implementing energy saving. After an idle UE becomes connected, specific signal receiving by the connected UE is triggered by the base station as needed (such as according to a small cell load, channel quality, carrier aggregation capability of the UE, etc.).

A specific signal according to an embodiment herein refers to a signal capable of identifying a small cell. A UE may recognize and determine a small cell by receiving or detecting such a specific signal. A specific signal according to an embodiment herein may include but not limited to one of a discovery signaling, a Channel State Information Reference Signal (CSI-RS), a Primary synchronization signal (PSS) and/or a Secondary synchronization signal (SSS), a synchronization tracking reference signal, and a Cell-specific Reference Signal (CRS).

The discovery signaling is small cell identifying information sent via a physical layer. Alternatively, a PSS/SSS/CRS, a Positioning Reference Signal (PRS), or a CSI-RS at present may serve as the discovery signaling. A CSI-RS sequence is computed according to a small cell Identification (ID). Therefore, after detecting a CSI-RS, a UE may acquire a small cell ID corresponding to the CSI-RS. PSS and SSS may be used for carrying a small cell ID. A synchronization tracking reference signal is similar to a CRS and a CSI-RS. After detecting a synchronization tracking reference signal or CRS, a UE may acquire a corresponding small cell ID.

The base station may notify, via a macro cell, a UE of a specific signal sent for identifying a small cell, implementing immediate receiving by the UE, avoiding blind detection of such a specific signal. Alternatively, the base station may notify, via a macro cell, a UE of a range for detecting the specific signal. This may also help the UE reduce a workload in sequence determination, For example, the UE may be notified of specific signal configuring information, such as CSI-RS configuring information (including one or more units without resource control information in CSI-RS-Config, CSI-RS-ConfigNZP, CSI-RS-ConfigNZPld, CSI-RS-ConfigZP, and CSI-RS-ConfigZPld) and a value or a set of possible values of a CSI-RS physical layer sequence.

The base station has to determine that small cell configuration is required for at least one UE before activating an inactive (deactivated) small cell and triggering sending of a specific signal for the activated small cell. In specific implementation, no specific signal identifying an inactive small cell is sent, if no trigger for the small cell sent by the base station is received. In fact, the small cell remains deactivated for network side energy saving. However, a specific signal is to be sent to identify a small cell serving at least one UE or configure to a UE such that a proper UE may discover and be served by the small cell in time.

When it is determined that small cell configuration for a UE is required according to load balance, signal quality, a scheduling need, etc., the base station may trigger sending of a specific signal (by which an inactive small cell under the macro cell may be identified), and trigger receiving of the specific signal by the UE. The base station may trigger receiving of the specific signal by the UE by dedicated Radio Resource Control (RRC) signaling or by broadcast. No specific signal may be received by the UE before the receiving of the specific signal by the UE is triggered by the base station. An idle UE may receive no specific signal. When receiving a trigger for specific signal receiving, a UE may have to recognize and verify a corresponding small cell according to a received specific signal, and report, to the base station, a verified small cell with channel quality meeting a preset requirement. The base station may select part or all of the any small cell reported by the UE according to a small cell load, channel quality, and carrier aggregation capability of the UE, and configure such a selected small cell for the UE. The base station may again deactivate a small cell not configured for the UE to save energy.

After configuring, for a UE, a small cell (as a candidate serving small cell of the UE),the base station may trigger sending of a candidate serving small cell measuring signal, such that the UE may perform measurement on the small cell configured for the UE by the base station. The measuring signal may include but be not limited to a CSI-RS and a CRS. No candidate serving small cell measuring signal for measuring a small cell is sent without a trigger from the base station for sake of network energy saving. When no data is transferred for a UE in a small cell or a small cell is not configured as a candidate serving small cell of a UE, no candidate serving small cell measuring signal for measuring the small cell may be sent. When data is transferred for a UE in a small cell or a small cell is configured as a candidate serving small cell of a UE, a candidate serving small cell measuring signal for measuring the small cell may be sent.

UE may have to report, to the base station, a result of measuring a candidate serving small cell configured for the UE by the base station. The base station may activate, according to the result, a small cell meeting a preset requirement to serve the UE. A preset requirement may include a reference small cell load, channel quality, and carrier aggregation capability of a UE.

A small cell may serve a UE after configuration and activation. That is, the base station may first configure a small cell for a UE. During small cell configuration, a UE may have to discover a small cell before determining a suitable small cell for the UE. A small cell configured for a UE by the base station (that is, a candidate serving small cell) is not necessarily activated by the base station as the small cell serving the UE.

In an embodiment herein, sending of a specific signal may be triggered by the base station. A small cell may support camping of no idle UE. Therefore, a specific signal identifying a small cell serving no UE may no longer be sent, such that the small cell remains deactivated to save energy. An idle UE may receive no specific signal and camp on a macro cell, such that an idle UE may not have to execute frequent small cell measurement, thereby allowing a UE to save energy. That is, an idle UE may operate as if no small cell exists.

The disclosure is explained below with embodiments.

In an Embodiment 1 herein, coverage of a macro cell and a subordinate small cell thereof in an inter-frequency HetNet is as shown in Fig.1. According to a method herein, in network deployment, a carrier of the macro cell may include at least one carrier using a compatible carrier type for larger coverage. A carrier in a small cell under the macro cell may adopt a new carrier type and be deployed in a hotspot to provide improved user experience in data service.

A macro cell may have to remain activated.

A small cell under a macro cell may have to remain deactivated (that is, an air interface remains deactivated and sends and receives no information) until sending of a corresponding specific signal is triggered via the macro cell. When a small cell under a macro cell is serving a UE (i.e. activated by a base station to serve the UE), or is configured for a UE by the base station (that is, sending of a specific signal for the small cell is triggered, although the small cell is not activated as a serving cell of the UE), the small cell may have to keep sending the specific signal.

An idle UE may receive no specific signal without a trigger from a base station managing a macro cell. By receiving a specific signal, a UE may recognize, discover, and determine a small cell according to the received specific signal, and report information on a small cell determined to the base station managing the macro cell. A base station managing a macro cell may configure, for a UE, a suitable small cell reported by the UE according to a small cell load, channel quality, and carrier aggregation capability supported by the UE.

A base station managing a macro cell may trigger sending of a candidate serving small cell measuring signal for measuring a small cell configured for a UE, and trigger deactivation of a small cell configured for no UE. The UE may execute measurement for a small cell configured for the UE, and report the result of the measurement to the base station managing the macro cell. The base station managing the macro cell may activate a small cell serving a UE according to the result of the measurement, a small cell load, and carrier aggregation capability of the UE.

In an Embodiment 2 herein, coverage of a macro cell and a subordinate small cell thereof in an inter-frequency HetNet is as shown in Fig.1. The disclosure may also apply to a case in which a compatible carrier type is deployed for a small cell.

In the embodiment a small cell supports no camping. A UE may camp in a macro cell. Thus, macro cell and small cell discovering and configuration as deswcribed in Embodiment 1 may also apply here. Energy saving at a network side and a UE side may be ensured likewise.

In Embodiment 3 herein, coverage of a macro cell and a subordinate small cell thereof in an inter-frequency HetNet is as shown in Fig.1. The disclosure may also apply to a case in which a compatible carrier type is deployed for a small cell.

In the embodiment, a small cell supports camping. A UE may camp on a suitable small cell. The implementation is as follows.

A macro cell may have to remain activated.

Sending of a specific signal in a small cell under a macro cell may continue, regardless of whether the small cell is configured or activated for a UE. An idle UE may also have to receive a specific signal, and identify and determine a nearby small cell in time using the specific signal. The UE may update and save a determined small cell in real time. When the specific signal supports UE measurement, the UE may immediately execute measurement according to the specific signal, and select a small cell meeting a camping condition to camp on. When the specific signal supports no UE measurement, UE may execute measurement using a reference signal for measurement (such as a CRS) in the small cell, and select a suitable small cell to camp on according to a result of the measurement.

When the base station has to configure a small cell for a UE, for example, for a UE in a connected state, receiving of a specific signal by the UE is triggered via the macro cell such that the UE may verify a small cell. The UE may report a discovered small cell to the macro cell (by reporting a saved updated nearby small cell; in fact, a UE may receive a specific signal in real time). A suitable small cell under the macro cell may be configured for the UE. The UE may execute measurement for a small cell configured for the UE, and report a result of the measurement. A proper small cell under the macro cell is selected and activated to serve the UE.

In Embodiment 4 herein, coverage of a macro cell and a subordinate small cell thereof in an inter-frequency HetNet is as shown in Fig.1. According to a method herein, in network deployment, a carrier of the macro cell may include at least one carrier using a compatible carrier type for larger coverage. A carrier in a small cell under the macro cell may adopt a new carrier type and be deployed in a hotspot to provide improved user experience in data service.

A macro cell may have to remain activated.

Sending of a specific signal in a small cell under a macro cell may continue, regardless of whether the small cell is configured or activated for a UE. A connected UE may also have to receive a specific signal, and identify and determine a nearby small cell in time using the specific signal. Preparation is made for small cell measurement, such that the UE in the connected state may measure only a small cell discovered nearby. That is, measurement may be executed only at a discovered small cell frequency.

An idle UE may receive no specific signal without a trigger from a base station managing a macro cell. By receiving a specific signal, a UE may recognize, discover, and determine a small cell according to the received specific signal, and report information on a small cell determined to the base station managing the macro cell. A base station managing a macro cell may configure, for a UE, a suitable small cell reported by the UE according to a small cell load, channel quality, and carrier aggregation capability supported by the UE.

A base station managing a macro cell may trigger sending of a candidate serving small cell measuring signal for measuring a small cell configured for a UE, and trigger deactivation of a small cell configured for no UE. The UE may execute measurement for a small cell configured for the UE, and report the result of the measurement to the base station managing the macro cell. The base station managing the macro cell may activate a small cell serving a UE according to the result of the measurement, a small cell load, and carrier aggregation capability of the UE.

In accordance with a method for discovering a small cell according to an embodiment herein, an apparatus for discovering a small cell is provided according to an embodiment herein. The apparatus applies to a base station managing a macro cell, and may include a triggering module.

The triggering module may be configured for triggering receiving of a specific signal by a User Equipment (UE), wherein the specific signal identifies an inactive small cell.

The triggering module may notify, by signaling, a small cell managing base station to send the specific signal.

The apparatus may further include an information receiving module and a configuring module.

The information receiving module may be configured for receiving information on any small cell discovered and determined to report by the UE according to the received specific signal.

The configuring module may be configured for selecting part or all of the any small cell reported by the UE, and configuring such a selected small cell as a candidate serving small cell of the UE.

The apparatus may further include an activating module configured for: triggering sending of a candidate serving small cell measuring signal to the UE; receiving a candidate serving small cell measuring result reported by the UE; selecting, according to the received candidate serving small cell measuring result, a candidate serving small cell as a serving small cell of the UE; and activating the serving small cell of the UE.

The activating module may be further configured for: selecting a candidate serving small cell as the serving small cell of the UE according to a small cell load, channel quality, and carrier aggregation capability of the UE.

The triggering module may be further configured for: triggering receiving of the specific signal by the UE by sending dedicated Radio Resource Control (RRC) signaling or by broadcast.

The configuring module may be further configured for: selecting part or all of the any small cell reported by the UE according to a small cell load, channel quality, and carrier aggregation capability of the UE, and configuring such a selected small cell as a candidate serving small cell of the UE.

A small cell Network Element (NE) may include a notification receiving module and a specific signal sending module.

The notification receiving module may be configured for: receiving notification sent by a base station managing a macro cell to send a specific signal identifying an inactive small cell.

The specific signal sending module may be configured for: after receiving the notification sent by the base station managing the macro cell, sending the specific signal to a User Equipment (UE) in the macro cell.

The NE may further include a measuring signal sending module configured for: when the small cell is selected as a candidate serving small cell of the UE, sending a candidate serving small cell measuring signal to the UE according to a trigger of the base station.

The NE may further include a UE serving module configured for: serving the UE when the small cell is activated by the base station as a serving small cell of the UE.

The small cell may be configured for supporting camping of no idle UE.

The small cell NE may be inactive and send no specific signal when transferring no data for a UE. The small cell NE may be active and send the specific signal identifying a small cell when data is transferred for a UE in the small cell.

The small cell NE may be configured for: sending no candidate serving small cell measuring signal when transferring no data for a UE or when the small cell is not configured as a candidate serving small cell of a UE; and/or sending a candidate serving small cell measuring signal when the small cell NE transfers data for a UE or the small cell is configured as a candidate serving small cell of a UE.

A UE may include a specific signal receiving module and a small cell reporting module.

The specific signal receiving module may be configured for receiving a specific signal identifying a small cell under a macro cell according to a trigger of a base station managing the macro cell.

The small cell reporting module may be configured for: discovering the small cell according to the received specific signal, and reporting information on a discovered small cell to the base station.

The UE may further include a measuring module configured for receiving a candidate serving small cell measuring signal for measuring a candidate serving small cell selected by the base station, and reporting a candidate serving small cell measuring result to the base station.

The specific signal receiving module may be configured for receiving no such specific signal without the trigger of the base station.

The small cell reporting module may be configured for reporting a small cell with channel quality meeting a requirement.

What described are merely embodiments of the disclosure, and are not intended to limit the scope of the present disclosure.

## Claims

1. A method for discovering a small cell, **characterized in that** the method comprises:
triggering, by a base station managing a macro cell, receiving of a specific signal by a User Equipment, UE, (202) by notifying, via the macro cell, the UE of the specific signal;
when the specific signal supports UE measurement, executing, by the UE, measurement according to the specific signal; and
recognizing and determining, by the UE, a small cell corresponding to a received specific signal, and reporting, to the base station, information on a determined small cell (203),
wherein a specific signal keeps being sent in a small cell under the macro cell regardless of whether the small cell is configured or activated for a UE,
wherein the method further comprises: after the triggering, by the base station, receiving of the specific signal by the UE (202),
receiving, by the base station, information on any small cell discovered and determined to report by the UE according to the received specific signal (203); and
selecting, by the base station, part or all of the any small cell reported by the UE, and configuring such a selected small cell as a candidate serving small cell of the UE (204),
wherein the method further comprises: after the selecting, by the base station, part or all of the any small cell reported by the UE, and configuring such a selected small cell as a candidate serving small cell of the UE (204),
triggering, by the base station, sending of a candidate serving small cell measuring signal to the UE (205); receiving, by the base station, a candidate serving small cell measuring result reported by the UE (206); selecting, according to the received candidate serving small cell measuring result, a candidate serving small cell as a serving small cell of the UE; and activating the serving small cell of the UE (207).

2. The method according to claim 1, wherein the specific signal identifies a small cell, and is one of:
a discovery signaling;
a Channel State Information Reference Signal, CSI-RS;
a Primary synchronization signal, PSS, and/or a Secondary synchronization signal (SSS); and
a Cell-specific Reference Signal, CRS,
wherein the discovery signaling is small cell identifying information, and a PSS/SSS/CRS or a CSI-RS serves as the discovery signaling.

3. The method according to claim 1, wherein the UE is notified of specific signal configuring information; when the specific signal comprises a CSI-RS, the specific signal configuring information comprises CSI-RS configuring information and a value of a CSI-RS physical layer sequence.

4. The method according to claim 1, wherein the base station triggers receiving of the specific signal by the UE by sending dedicated Radio Resource Control, RRC, signaling or by broadcast.

5. The method according to claim 1, wherein the UE reports, to the base station, a small cell with channel quality meeting a requirement.

6. The method according to claim 1, wherein the UE recognizes and verifies a small cell corresponding to a received specific signal, and reports, to the base station, a verified small cell with channel quality meeting a preset requirement.

7. The method according to claim 1, further comprising: before the triggering, by a base station managing a macro cell, receiving of a specific signal by a UE (202), triggering, by the base station, sending of the specific signal by a small cell managing base station (201).

8. A system for discovering a small cell, **characterized in that** the system comprises a base station managing a macro cell and a User Equipment, UE, wherein
the base station is configured for: triggering receiving of a specific signal by the UE by notifying, via the macro cell, the UE of the specific signal; and
the UE is configured for: when the specific signal supports UE measurement, executing measurement according to the specific signal; and recognizing and determining a small cell corresponding to a received specific signal, and reporting, to the base station, information on a determined small cell,
wherein a specific signal keeps being sent in a small cell under the macro cell regardless of whether the small cell is configured or activated for a UE,
wherein the base station is further configured for: after the triggering receiving of the specific signal by the UE,
receiving information on any small cell discovered and determined to report by the UE according to the received specific signal; and
selecting part or all of the any small cell reported by the UE, and configuring such a selected small cell as a candidate serving small cell of the UE,
triggering sending of a candidate serving small cell measuring signal to the UE; receiving a candidate serving small cell measuring result reported by the UE; selecting, according to the received candidate serving small cell measuring result, a candidate serving small cell as a serving small cell of the UE; and activating the serving small cell of the UE.

9. The system according to claim 8, wherein the specific signal identifies a small cell, and is one of:
a discovery signaling;
a Channel State Information Reference Signal, CSI-RS;
a Primary synchronization signal, PSS, and/or a Secondary synchronization signal, SSS; and
a Cell-specific Reference Signal, CRS,
wherein the discovery signaling is small cell identifying information, and a PSS/SSS/CRS or a CSI-RS serves as the discovery signaling.

10. The system according to claim 8, wherein the UE is configured for receiving specific signal configuring information, wherein when the specific signal comprises a CSI-RS, the specific signal configuring information comprises CSI-RS configuring information and a value of a CSI-RS physical layer sequence.

11. The system according to claim 8, wherein the base station is configured for triggering receiving of the specific signal by the UE by sending dedicated Radio Resource Control, RRC, signaling or by broadcast.

12. The system according to claim 8, wherein the UE is configured for recognizing and verifying a small cell corresponding to a received specific signal, and reporting, to the base station, a verified small cell with channel quality meeting a preset requirement.

13. The system according to claim 8, further comprising a small cell managing apparatus, wherein the base station is configured for: before triggering receiving of the specific signal by the UE, triggering sending of the specific signal by the small cell managing apparatus.

## Patentansprüche

1. Verfahren zur Ermittlung einer kleinen Zelle, **dadurch gekennzeichnet, dass** das Verfahren umfasst:
Auslösen durch eine Basisstation, die eine Makrozelle verwaltet, eines Empfangens eines spezifischen Signals durch eine Benutzereinrichtung, UE, (202) durch Benachrichtigen der UE vom spezifischen Signal über die Makrozelle;
Ausführen, wenn das spezifische Signal UE-Messung unterstützt, von Messung durch die UE gemäß dem spezifischen Signal; und
Erkennen und Bestimmen einer kleinen Zelle durch die UE, die einem empfangenen spezifischen Signal entspricht, und Melden von Informationen über eine bestimmte kleine Zelle an die Basisstation (203),
wobei ein spezifisches Signal in einer kleinen Zelle unter der Makrozelle, ungeachtet dessen, ob die kleine Zelle für eine UE konfiguriert ist oder aktiviert wird, immer wieder gesendet wird;
wobei das Verfahren ferner umfasst: Empfangen des spezifischen Signals durch die UE (202) nach dem Auslösen durch die Basisstation,
Empfangen, durch die Basisstation, von Informationen über jede ermittelte und bestimmte kleine Zelle, die durch die UE gemäß dem empfangenen spezifischen Signal gemeldet wird (203); und
Auswählen durch die Basisstation eines Teils oder der Gesamtheit der jeden Zelle, die durch die UE gemeldet wird, und Konfigurieren solch einer ausgewählten kleinen Zelle als eine in Frage kommende versorgende kleine Zelle der UE (204),
wobei das Verfahren ferner umfasst: nach dem Auswählen durch die Basisstation eines Teils oder der Gesamtheit der jeden Zelle, die durch die UE gemeldet wird, und Konfigurieren solch einer ausgewählten kleinen Zelle als eine in Frage kommende versorgende kleine Zelle der UE (204),
Auslösen, durch die Basisstation, eines Sendens eines Signals zum Messen einer in Frage kommenden versorgenden kleinen Zelle an die UE (205); Empfangen durch die Basisstation eines Ergebnisses des Messens der in Frage kommenden versorgenden kleinen Zelle, das durch die UE gemeldet wird (206); Auswählen, gemäß dem empfangenen Ergebnis des Messens der in Frage kommenden versorgenden kleinen Zelle, einer in Frage kommenden versorgenden Zelle als eine versorgende kleine Zelle der UE; und Aktivieren der versorgenden kleinen Zelle der UE (207).

2. Verfahren nach Anspruch 1, wobei das spezifische Signal eine kleine Zelle identifiziert und eines ist von:
einer Ermittlungssignalisierung;
einem Kanalzustandsinformations-Referenzsignal, CSI-RS;
einem primären Synchronisationssignal, PSS, und/oder einem sekundären Synchronisationssignal, SSS; und
einem zellspezifischen Referenzsignal, CRS,
wobei es sich bei der Ermittlungssignalisierung um Informationen zum Identifizieren von kleinen Zellen handelt, und ein PSS/SSS/CRS oder ein CSI-RS als die Ermittlungssignalisierung dient.

3. Verfahren nach Anspruch 1, wobei die UE von Konfigurationsinformationen des spezifischen Signals benachrichtigt wird; wobei, wenn das spezifische Signal ein CSI-RS umfasst, die Konfigurationsinformationen des spezifischen Signals CSI-RS-Konfigurationsinformationen und einen Wert einer CSI-RS-Bitübertragungsschichtfolge umfassen.

4. Verfahren nach Anspruch 1, wobei die Basisstation ein Empfangen des spezifischen Signals durch die UE durch Senden dedizierter Funkressourcensteuerungs, RRC,-Signalisierung oder durch Broadcast auslöst.

5. Verfahren nach Anspruch 1, wobei die UE eine kleine Zelle mit einer Kanalqualität, die eine Anforderung erfüllt, an die Basisstation meldet.

6. Verfahren nach Anspruch 1, wobei die UE eine kleine Zelle, die einem empfangenen spezifischen Signal entspricht, erkennt und verifiziert, und eine verifizierte kleine Zelle mit einer Kanalqualität, die eine vorgegebene Anforderung erfüllt, an die Basisstation meldet.

7. Verfahren nach Anspruch 1, ferner umfassend: Auslösen durch die Basisstation eines Sendens eines spezifischen Signals durch eine kleine Zellen verwaltende Basisstation (201) vor dem Auslösen durch eine Basisstation, die eine Makrozelle verwaltet, des Empfangens des spezifischen Signals durch eine UE (202).

8. System zum Ermitteln einer kleinen Zelle, **dadurch gekennzeichnet, dass** das System eine Basisstation, die eine Makrozelle verwaltet, und eine Benutzereinrichtung, UE, umfasst; wobei
die Basisstation konfiguriert ist zum: Auslösen eines Empfangens eines spezifischen Signals durch die UE durch Benachrichtigen der UE vom spezifischen Signal über die Makrozelle; und
die UE konfiguriert ist zum: Ausführen, wenn das spezifische Signal UE-Messung unterstützt, von Messung gemäß dem spezifischen Signal; und Erkennen und Bestimmen einer kleinen Zelle, die einem empfangenen spezifischen Signal entspricht, und Melden von Informationen über eine bestimmte kleine Zelle an die Basisstation,
wobei ein spezifisches Signal in einer kleinen Zelle unter der Makrozelle ungeachtet dessen, ob die kleine Zelle für eine UE konfiguriert ist oder aktiviert wird, immer wieder gesendet wird,
wobei die Basisstation ferner konfiguriert ist zum: nach dem Auslösen des Empfangens des spezifischen Signals durch die UE
Empfangen von Informationen über jede ermittelte und bestimmte kleine Zelle, die durch die UE gemäß dem empfangenen spezifischen Signal gemeldet wird; und
Auswählen eines Teils oder der Gesamtheit der jeden Zelle, die durch die UE gemeldet wird, und Konfigurieren solch einer ausgewählten kleinen Zelle als eine in Frage kommende versorgende kleine Zelle der UE,
Auslösen eines Sendens eines Signals zum Messen einer in Frage kommenden versorgenden kleinen Zelle an die UE; Empfangen eines Ergebnisses des Messens der in Frage kommenden versorgenden kleinen Zelle, das durch die UE gemeldet wird; Auswählen, gemäß dem empfangenen Ergebnis des Messens der in Frage kommenden versorgenden kleinen Zelle, einer in Frage kommenden versorgenden Zelle als eine versorgende kleine Zelle der UE; und Aktivieren der versorgenden kleinen Zelle der UE.

9. System nach Anspruch 8, wobei das spezifische Signal eine kleine Zelle identifiziert und eines ist von:
einer Ermittlungssignalisierung;
einem Kanalzustandsinformations-Referenzsignal, CSI-RS;
einem primären Synchronisationssignal, PSS, und/oder einem sekundären Synchronisationssignal, SSS und
einem zellspezifischen Referenzsignal, CRS,
wobei es sich bei der Ermittlungssignalisierung um Informationen zum Identifizieren von kleinen Zellen handelt, und ein PSS/SSS/CRS oder ein CSI-RS als die Ermittlungssignalisierung dient.

10. System nach Anspruch 8, wobei die UE zum Empfangen von Konfigurationsinformationen eines spezifischen Signals konfiguriert ist, wobei, wenn das spezifische Signal ein CSI-RS umfasst, die Konfigurationsinformationen des spezifischen Signals CSI-RS-Konfigurationsinformationen und einen Wert einer CSI-RS-Bitübertragungsschichtfolge umfassen.

11. System nach Anspruch 8, wobei die Basisstation zum Auslösen eines Empfangens des spezifischen Signals durch die UE durch Senden dedizierter Funkressourcensteuerungs, RRC,-Signalisierung oder durch Broadcast konfiguriert ist.

12. System nach Anspruch 8, wobei die UE zum Erkennen und Verifizieren einer kleinen Zelle, die einem empfangenen spezifischen Signal entspricht, und Melden einer verifizierten kleinen Zelle mit einer Kanalqualität, die eine vorgegebene Anforderung erfüllt, an die Basisstation konfiguriert ist.

13. System nach Anspruch 8, ferner umfassend eine kleine Zellen verwaltende Vorrichtung, wobei die Basisstation konfiguriert ist zum: Auslösen eines Sendens eines spezifischen Signals durch die kleine Zellen verwaltende Vorrichtung vor dem Auslösen des Empfangens des spezifischen Signals durch die UE.

## Revendications

1. Procédé de découverte d'une petite cellule, **caractérisé en ce que** le procédé comprend les étapes ci-dessous consistant à :
déclencher, par le biais d'une station de base gérant une macrocellule, la réception d'un signal spécifique par un équipement d'utilisateur, UE, (202) en notifiant le signal spécifique à l'équipement UE par l'intermédiaire de la macrocellule ;
lorsque le signal spécifique prend en charge une mesure d'équipement UE, exécuter, par le biais de l'équipement UE, une mesure selon le signal spécifique ; et
reconnaître et déterminer, par le biais de l'équipement UE, une petite cellule correspondant à un signal spécifique reçu, et signaler, à la station de base, des informations sur une petite cellule déterminée (203) ;
dans lequel un signal spécifique continue à être envoyé dans une petite cellule sous la macrocellule, que la petite cellule soit ou non configurée ou activée pour un équipement UE;
dans lequel le procédé comprend en outre les étapes ci-dessous consistant à : suite au déclenchement, par le biais de la station de base, de la réception du signal spécifique par l'équipement UE (202) :
recevoir, par le biais de la station de base, des informations sur une quelconque petite cellule découverte et déterminée, à signaler par le biais de l'équipement UE, selon le signal spécifique reçu (203) ; et
sélectionner, par le biais de la station de base, tout ou partie de ladite une quelconque petite cellule signalée par l'équipement UE, et configurer une telle petite cellule sélectionnée en tant qu'une petite cellule de desserte candidate de l'équipement UE (204) ;
dans lequel le procédé comprend en outre les étapes ci-dessous consistant à : suite à la sélection, par la station de base, de tout ou partie de ladite une quelconque petite cellule signalée par l'équipement UE, et suite à la configuration d'une telle petite cellule sélectionnée en tant qu'une petite cellule de desserte candidate de l'équipement UE (204) :
déclencher, par la station de base, l'envoi à l'équipement UE (205) d'un signal de mesure de petite cellule de desserte candidate; recevoir, par le biais de la station de base, un résultat de mesure de petite cellule de desserte candidate signalé par l'équipement UE (206) ; sélectionner, selon le résultat de mesure de petite cellule de desserte candidate reçu, une petite cellule de desserte candidate, en tant qu'une petite cellule de desserte de l'équipement UE ; et activer la petite cellule de desserte de l'équipement UE (207).

2. Procédé selon la revendication 1, dans lequel le signal spécifique identifie une petite cellule et correspond à l'un parmi :
une signalisation de découverte ;
un signal de référence d'informations d'état de canal, CSI-RS ;
un signal de synchronisation primaire, PSS et/ou un signal de synchronisation secondaire, SSS ; et
un signal de référence spécifique à la cellule, CRS,
dans lequel la signalisation de découverte correspond à des informations d'identification de petite cellule, et un signal PSS/SSS/CRS ou un signal CSI-RS sert de signalisation de découverte.

3. Procédé selon la revendication 1, dans lequel sont notifiées, à l'équipement UE, des informations de configuration de signal spécifique ; lorsque le signal spécifique comprend un signal CSI-RS, les informations de configuration de signal spécifique comprennent des informations de configuration de signal CSI-RS et une valeur d'une séquence de couches physiques de signal CSI-RS.

4. Procédé selon la revendication 1, dans lequel la station de base déclenche la réception du signal spécifique par l'équipement UE en envoyant une signalisation de gestion de ressources radio dédiée, RRC, ou par diffusion.

5. Procédé selon la revendication 1, dans lequel l'équipement UE signale, à la station de base, une petite cellule dont la qualité de canal satisfait une exigence.

6. Procédé selon la revendication 1, dans lequel l'équipement UE reconnaît et vérifie une petite cellule correspondant à un signal spécifique reçu, et signale, à la station de base, une petite cellule vérifiée dont la qualité de canal satisfait une exigence prédéfinie.

7. Procédé selon la revendication 1, comprenant en outre l'étape consistant à : avant l'étape de déclenchement, par une station de base gérant une macrocellule, de la réception d'un signal spécifique par un équipement UE (202), déclencher, par la station de base, l'envoi du signal spécifique par une station de base de gestion de petite cellule (201).

8. Système destiné à découvrir une petite cellule, **caractérisé en ce que** le système comprend une station de base gérant une macrocellule et un équipement d'utilisateur, UE, dans lequel
la station de base est configurée de manière à : déclencher la réception d'un signal spécifique par l'équipement UE, en notifiant le signal spécifique à l'équipement UE par l'intermédiaire de la macrocellule ; et
l'équipement UE est configuré de manière à : lorsque le signal spécifique prend en charge une mesure d'équipement UE, exécuter une mesure selon le signal spécifique ; et reconnaître et déterminer une petite cellule correspondant à un signal spécifique reçu, et signaler, à la station de base, des informations sur une petite cellule déterminée ;
dans lequel un signal spécifique continue à être envoyé dans une petite cellule sous la macrocellule, que la petite cellule soit ou non configurée ou activée pour un équipement UE;
dans lequel la station de base est en outre configurée de manière à : suite au déclenchement de la réception du signal spécifique par l'équipement UE :
recevoir des informations sur une quelconque petite cellule découverte et déterminée, à signaler par le biais de l'équipement UE, selon le signal spécifique reçu ; et
sélectionner tout ou partie de ladite une quelconque petite cellule signalée par l'équipement UE, et configurer une telle petite cellule sélectionnée en tant qu'une petite cellule de desserte candidate de l'équipement UE ;
déclencher l'envoi d'un signal de mesure de petite cellule de desserte candidate, à l'équipement UE ; recevoir un résultat de mesure de petite cellule de desserte candidate signalé par l'équipement UE ; sélectionner, selon le résultat de mesure de petite cellule de desserte candidate reçu, une petite cellule de desserte candidate, en tant qu'une petite cellule de desserte de l'équipement UE ; et activer la petite cellule de desserte de l'équipement UE.

9. Système selon la revendication 8, dans lequel le signal spécifique identifie une petite cellule, et correspond à l'un parmi :
une signalisation de découverte ;
un signal de référence d'informations d'état de canal, CSI-RS ;
un signal de synchronisation primaire, PSS et/ou un signal de synchronisation secondaire, SSS ; et
un signal de référence spécifique à la cellule, CRS ;
dans lequel la signalisation de découverte correspond à des informations d'identification de petite cellule, et un signal PSS/SSS/CRS ou un signal CSI-RS sert de signalisation de découverte.

10. Système selon la revendication 8, dans lequel l'équipement UE est configuré de manière à recevoir des informations de configuration de signal spécifique, dans lequel lorsque le signal spécifique comprend un signal CSI-RS, les informations de configuration de signal spécifique comprennent des informations de configuration de signal CSI-RS et une valeur d'une séquence de couches physiques de signal CSI-RS.

11. Système selon la revendication 8, dans lequel la station de base est configurée de manière à déclencher la réception du signal spécifique par l'équipement UE en envoyant une signalisation de gestion de ressources radio dédiée, RRC, ou par diffusion.

12. Système selon la revendication 8, dans lequel l'équipement UE est configuré de manière à reconnaître et vérifier une petite cellule correspondant à un signal spécifique reçu, et à signaler, à la station de base, une petite cellule vérifiée dont la qualité de canal satisfait une exigence prédéfinie.

13. Système selon la revendication 8, comprenant en outre un appareil de gestion de petite cellule, dans lequel la station de base est configurée de manière à : avant de déclencher la réception du signal spécifique par l'équipement UE, déclencher l'envoi du signal spécifique par l'appareil de gestion de petite cellule.
